# EUROPÄISCHE PATENTSCHRIFT

(11) **EP 0 667 420 B1**
(45) Veröffentlichungstag und Bekanntmachung des Hinweises auf die Patenterteilung: **02.07.1997**
(21) Anmeldenummer: 95102006.4
(22) Anmeldetag: 14.02.1995
(51) Int. Cl.: E02D 19/16, C09K 17/02, C09K 17/12

(54) **Verfahren zur Abdichtung von Bodenformationen**
Process for sealing soil formations
Procédé pour étancher des couches de sol

(30) Priorität: 14.02.1994 DE 4404644
(43) Veröffentlichungstag der Anmeldung: 16.08.1995
(73) Patentinhaber: Kügler, Jost-Ulrich, D-45219 Essen (DE)
(72) Erfinder: Kügler, Jost-Ulrich, D-45219 Essen (DE)
(74) Vertreter: Dost, Wolfgang, Dr.rer.nat., Dipl.-Chem.

(56) Entgegenhaltungen:
- WO-A-89/01547
- DE-A- 1 517 342
- DE-A- 2 600 625
- DE-A- 2 702 787
- DE-A- 3 709 778
- DE-C- 936 559
- US-A- 4 043 830
- US-A- 4 056 937

## Beschreibung

Die Erfindung betrifft ein Verfahren zur Abdichtung von Bodenformationen, wobei eine mineralische Abdichtungsschicht aus einem bindigen Boden unter Zusatz von pulverförmigem Wasserglas aufgebracht und mechanisch verdichtet wird.

Ein derartiges Verfahren unter Verwendung mineralischer Abdichtungsschichten aus natürlichen Böden ist aus der DE-A-27 02 787 bekannt. Durch die Verwendung von pulverförmigem Wasserglas lassen sich die Durchlässigkeitsbeiwerte K_{f} der mineralischen Abdichtungsschicht auf Werte im Bereich von 3,6 bis 1,3 x 10⁻¹⁰ m/s verbessern.

Weiterhin ist aus der EP-B 338 039 ein Verfahren zur Abdichtung von Bodenformationen bekannt, bei dem man Klärschlamm oder Gewässerschlamm mit 30 bis 70 Gew.-%, bezogen auf Schlammtrockengewicht, wasseraufnahmefähigen, kornbeständigen Zuschlagstoff vermischt, das erhaltene Kunstboden-Gemisch auf die Bodenformation aufbringt und mechanisch verdichtet. In einer besonderen Ausführungsform ist hierbei vorgesehen, daß man unter Zusatz von Natriumaluminat als Weichgelbildner und pulverförmigem Wasserglas arbeitet, wobei man zunächst das Wasserglas in trockener Form einmischt und erst nach Auflösung des Wasserglases den Weichgelbildner durch einen weiteren Verarbeitungsvorgang einmischt. Für dieses Kunstboden-System werden Durchlässigkeitsbeiwerte K_{f} von 5 x 10⁻¹⁰ bis 3 x 10⁻¹¹ m/s angegeben.

Das in der EP-B 338 039 (& WO-A-8901547) beschriebene Verfahren unterliegt jedoch gewissen Einschränkungen, und zwar deshalb, weil wegen des hohen Schadstoffgehaltes des Klärschlamms und seiner Zuschlagstoffe (wie Kraftwerksaschen oder Müllverbrennungsaschen) Umweltbedenken bestehen. So ist z.B. die Verwendung von derartigen Klärschlammgemischen wegen des hohen Schadstoffgehaltes nicht für Basisabdichtungen sondern nur für Deckelabdichtungen von Deponien zugelassen. Abgesehen von diesen Beschränkungen für bestimmte Kunstböden besitzen andererseits Naturböden, wie tonhaltige Böden, die für derartige Abdichtungen am besten geeignet und an sich für Basisabdichtungen zugelassen sind, auf Dauer kein ausreichendes Schadstoffrückhaltevermögen und unterliegen zusätzlich einer physikochemischen Veränderung, was zu einer Erhöhung der Permeabilität auf Dauer führt. Dies ist auch der Grund für die Entwicklung der Kombidichtung, bei der über der Ton-Abdichtungsschicht eine Kunststoff-Dichtungsbahn vorgesehen ist.

Es wurde nun gefunden, daß sich ausgezeichnete Durchlässigkeitsbeiwerte bei gleichzeitig gutem Schadstoffrückhaltevermögen bei der Abdichtung mit natürlich bzw. künstlich vorkommenden bindigen Böden erreichen lassen, wenn man
(a) zunächst mit einem bindigen Boden mit einem Wassergehalt im nassen Bereich der Proctorkurve unter Zusatz von pulverförmigem Weichgelbildner ein homogenes Gemisch herstellt,
(b) nach Auflösung des Weichgelbildners im Bodenwasser pulverförmiges Wasserglas homogen einarbeitet, und
(c) schließlich mechanisch verdichtet.

Der Erfolg dieses Verfahrens ist deshalb überraschend, weil im Verfahren der vorgenannten EP-B 338 039 ausdrücklich festgelegt ist, daß erst das Wasserglas eingemischt werden muß, und erst nach Auflösung des Wasserglases der flüssige Weichgelbildner durch einen weiteren Verarbeitungsvorgang eingemischt werden kann (Spalte 5, Zeilen 45-50 und Patentanspruch 11).

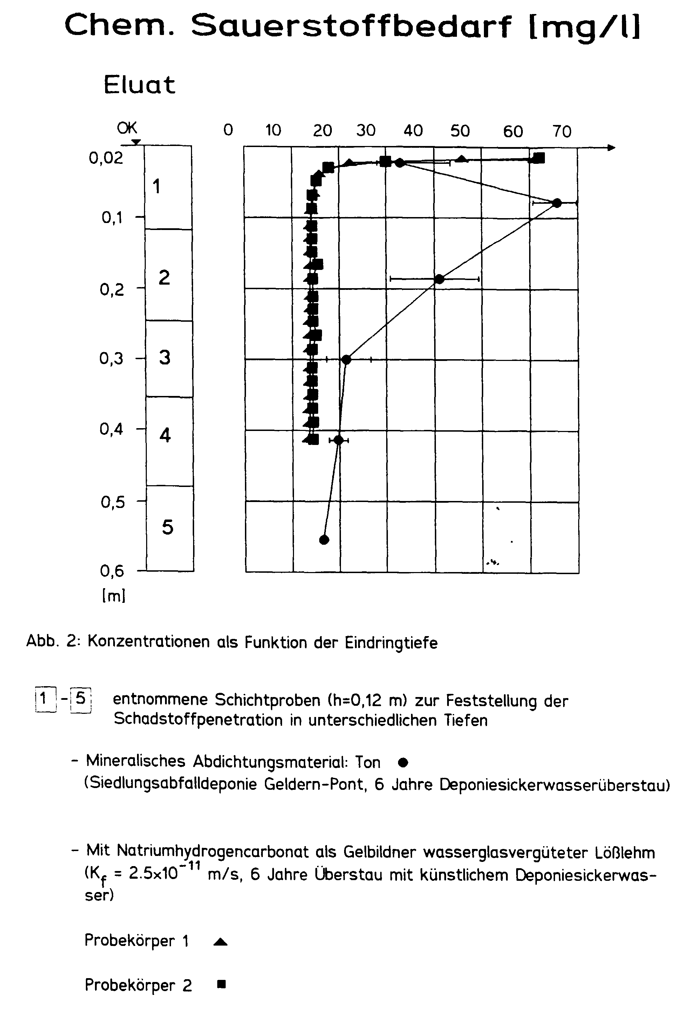

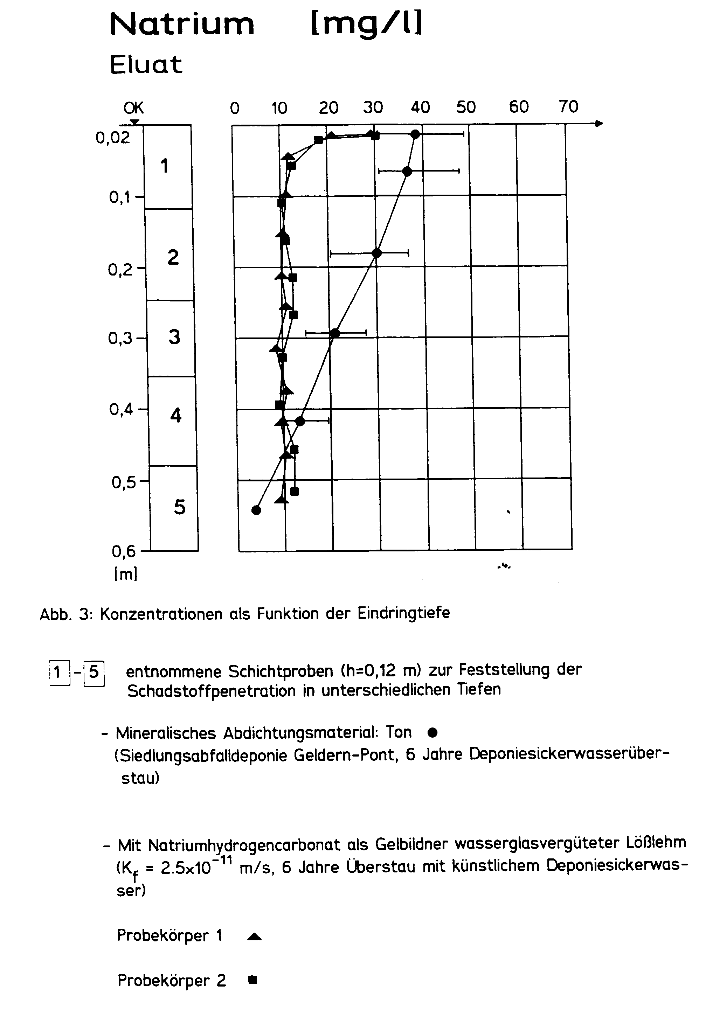

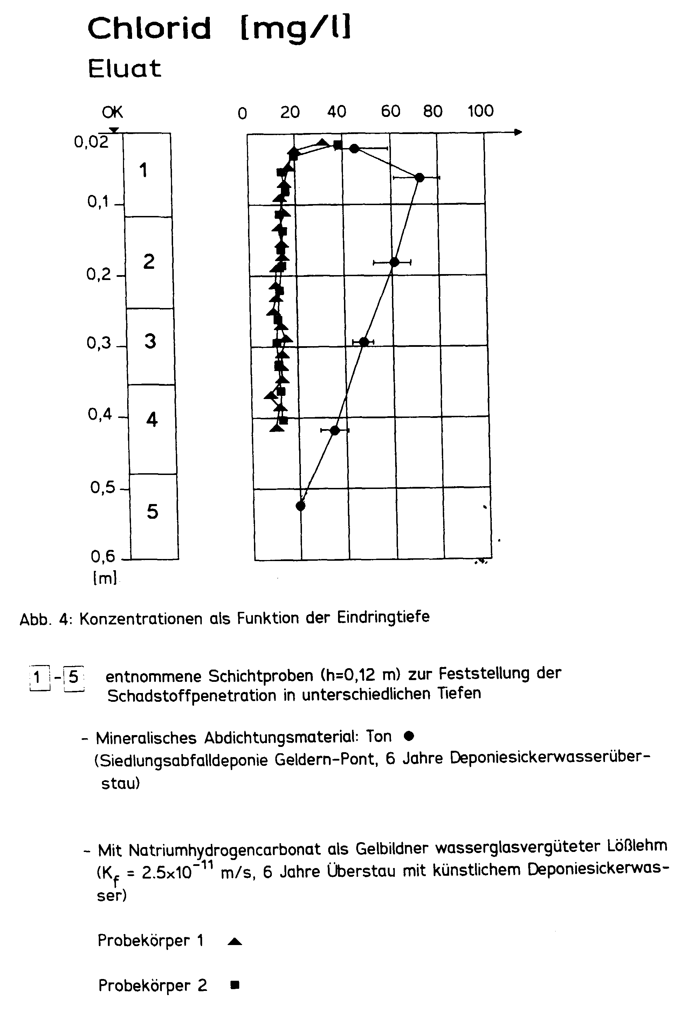

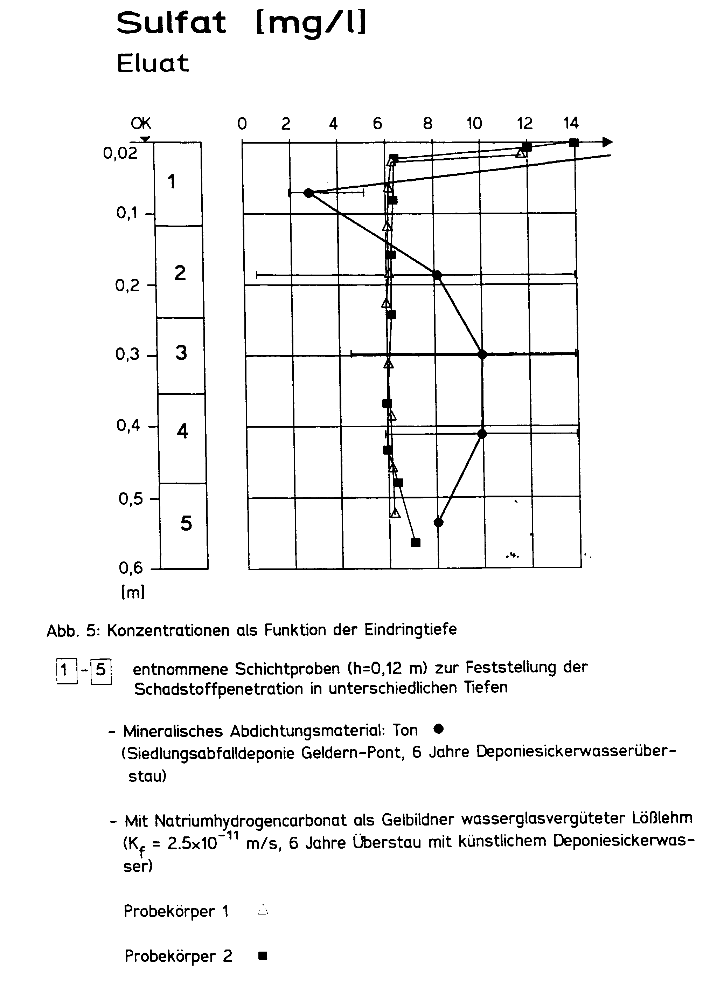

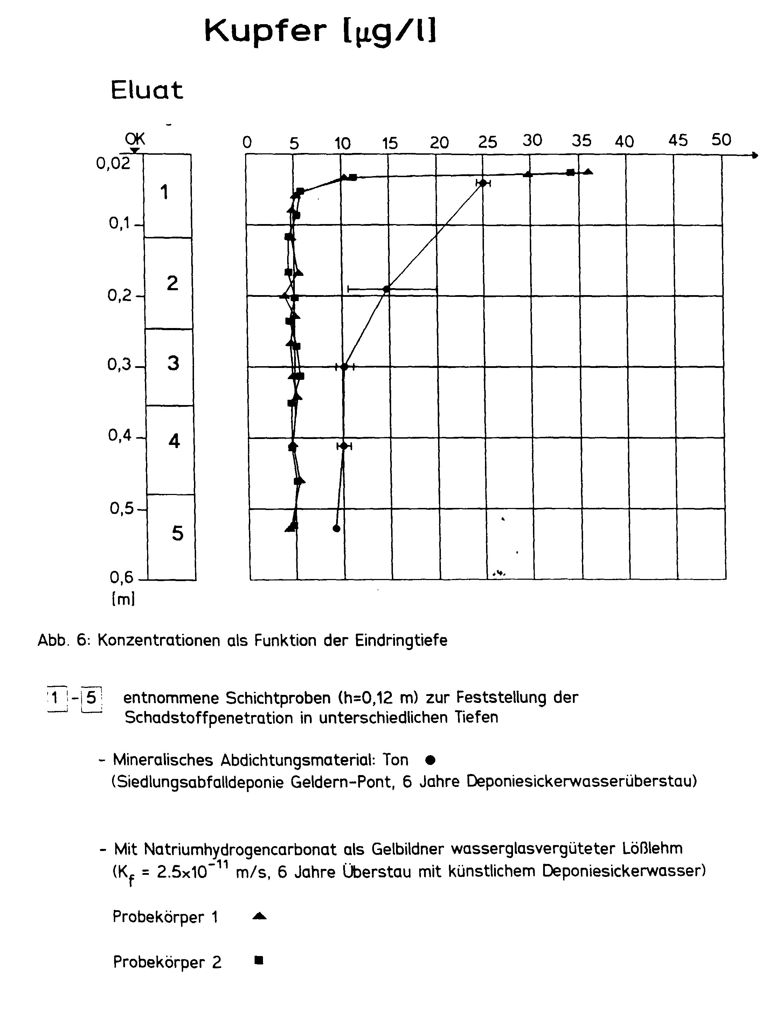

Mit dem Verfahren der Erfindung lassen sich Durchlässigkeitsbeiwerte, je nach gewählter Bodenart, im Bereich von K_{f} = 5 x 10 ⁻¹¹ bis 1 x 10 ⁻¹² erzielen. Ein besonderer Vorteil besteht darüber hinaus darin, daß sich die fertige Abdichtungsschicht bei allen gewählten feinkörnigen bindigen Bodenarten (sandiger Schluff bis Ton) durch ein besonders hohes Schadstoff-Rückhaltevermögen, und zwar sowohl bezüglich anorganischer als auch organischer Schadstoffe auszeichnet. Diesbezüglich werden die Werte für die allgemein anerkannten Tondichtungen bei weitem übertroffen, wie sich aus den beigefügten Abbildung 2 bis 6 ergibt. Dieses hohe Schadstoff-Rückhaltevermögen hat hinsichtlich des langfristigen Grundwasserschutzes gegen Einwirkung von Deponiesickerwässern eine sehr große Bedeutung. Da die mit dem Verfahren der Erfindung hergestellten Abdichtungsschichten bzgl. ihres Schadstoff-Rückhaltevermögens den aufwendigeren Kombinationsdichtungen, bestehend aus einer Kunststoff-Dichtungsbahn und einer mineralischen, tonhaltigen Abdichtungsschicht gleichwertig sind, lassen sich diese Kombinationsdichtungen durch die erfindungsgemäß hergestellte Abdichtungsschichten ersetzen, was erhebliche Kosteneinsparungen und bessere bautechnische Vorteile hinsichtlich der Herstellbarkeit mit sich bringt.

Beispiele für erfindungsgemäß geeignete Weichgelbildner sind Natriumhydrogencarbonat, Natriumacetat und Natriumhydrogenphosphat. Natriumhydrogencarbonat ist bevorzugt, und zwar deshalb, weil gegen Phosphate und Acetate aus Umweltgründen Bedenken bestehen können. In einigen Fällen werden jedoch auch Gemische der Weichgelbildner verwendet.

Der Weichgelbildner wird pulverförmig, im allgemeinen in einer Menge von 1 bis 10 Gew.-%, bezogen auf die Menge an freiem Bodenwasser, vorzugsweise in einer Menge von 2 bis 8 Gew.-% und insbesondere 3 bis 6 Gew.-% verwendet. Der Ausdruck "pulverförmig" bezeichnet hierbei eine feinteilige trockene Form, schließt also auch flockenförmig usw. mit ein. Das Gleiche gilt für das pulverförmige Wasserglas.

Das pulverförmige Wasserglas wird im allgemeinen in einer Menge von 1 bis 10 Gew.-%, vorzugsweise 2 bis 8 Gew.-% und insbesondere 3 bis 6 Gew.-%, jeweils bezogen auf die Menge des freien Bodenwassers, verwendet. Es sind sowohl Natron- als auch Kaliwassergläser geeignet. Natronwassergläser sind wegen ihrer Wohlfeilheit bevorzugt. Dabei ist auf eine hohe Konzentration an SiO₂ und eine gute Löslichkeit zu achten.

Ein besonders geeignetes Handelsprodukt ist unter der Bezeichnung Deposil N erhältlich.

Wasserglas und Weichgelbildner werden im allgemeinen in einem Gewichtsverhältnis wichtsverhältnis von 2:1 bis 1:2 verwendet. Hierbei ist ein von etwa 1:1 besonders bevorzugt. Offensichtlich beeinflussen sich Wasserglas und Weichgelbildner gegenseitig, denn bei Verwendung von Wasserglas allein oder von Weichgelbildner allein, auch in größeren Mengen, lassen sich die erfindungsgemäß beobachteten guten Werte bezüglich Durchlässigkeitsbeiwert und Schadstoffrückhaltung kurzfristig nicht erzielen.

Beispiele für erfindungsgemäß geeignete bindige Böden sind feinkörnige Boden und gemischkörnige Böden gemäß DIN 18196. Hierzu gehören definitionsgemäß Ton, Schluff, Sand-Tongemische, Sand-Schluffgemische, Kies-Tongemische und Kies-Schluffgemische sowie deren Gemische untereinander. Dabei kann es sich um natürliche oder künstliche Böden handeln.

Die erfindungsgemäß verwendeten bindigen Böden sind mit einen Wassergehalt im nassen Bereich der Proctorkurve zu verarbeiten und zu verdichten. Hierbei liegt der Proctorwert im allgemeinen im Bereich von 100 bis 85% und vorzugsweise 91 bis 97%, wobei Proctorwerte im Bereich von 92 bis 95% besonders bevorzugt sind. Diese Proctorwerte sind bestimmt nach DIN 18127. Hierbei wird ein gegebener Boden in einen Zylinder eingefüllt und mit einer genormten Energie eingestampft. Je nach Wassergehalt des Bodens erhält man dann eine bestimmte Verdichtung des Bodens. Aus den bestimmten Dichten des Bodens und aus den den unterschiedlichen Wassergehalten zugeordneten Dichtewerten erhält man die sogenannte Proctorkurve mit einem Dichtemaximum für einen bestimmten Wassergehalt und beidseitig dieses Maximums abfallenden Dichtewerten für geringere Wassergehalte (trockener Bereich) bzw. höhere Wassergehalte (nasser Bereich). Erfindungsgemäß werden ausschließlich Böden mit einem Wassergehalt im nassen Bereich der Proctorkurve verwendet. Sofern der Wassergehalt des bindigen Bodens nicht ausreichend ist, wird er durch Berieselung auf einen geeigneten Wert gebracht. Andererseits kann bei besonders hohen Wassergehalten eine vorherige Abtrocknung von Vorteil sein, um den Wassergehalt in den bevorzugten Bereich der Proctorkurve zu bringen. Dieses läßt sich z. B. auch durch Zumischung feinstkörniger trockener Zuschlagstoffe, wie Stäube oder Tonmehle erreichen.

Die Qualität der Abdichtung ist auch von der Korngrößenverteilung des Bodens abhängig. So besitzt z. B. Auelehm eine günstigere Korngrößenverteilung als Lößlehm, weshalb sich - unter sonst gleichen Bedingungen - mit Auelehm grundsätzlich ein besserer Abdichtungswert als mit Lößlehm erreichen läßt (vgl. auch die Ausführungsbeispiele weiter unten). Nach Maßgabe des zu verwendenden Ausgangsbodens kann es daher bevorzugt sein, relativ gleichkörnige Böden durch Zugabe trockener Zuschlagstoffe, wie inaktive kaolinitische Tonmehle, hinsichtlich der Korngrößenverteilung aufzubessern.

Der pH-Wert des Bodens spielt an sich keine besondere Rolle. Der pH-Wert natürlicher Böden liegt durchweg in einem Bereich von 4 bis 9, im allgemeinen sogar 5,5 bis 8, so daß keine besonderen Maßnahmen erforderlich sind. Bei Kunstböden kann es jedoch nach Maßgabe der verwendeten Zuschlagstoffe vorkommen, daß sich ein pH-Wert ergibt, der außerhalb des vorgenannten Bereiches von 4 bis 9 liegt. Hierbei wird es dann notwendig, durch Zugabe entsprechender saurer oder basischer Zuschlagstoffe oder auch Agentien den pH-Wert entsprechend zu korrigieren.

Bei der Durchführung des Verfahrens der Erfindung wird in Schritt (a) zunächst aus dem bindigen Boden unter Zusatz von pulverförmigem Weichgelbildner ein homogenes Gemisch hergestellt. Homogen bedeutet hierbei, daß nach dem Vermischen im gesamten Material eine gleichmäßige Korngrößenverteilung vorliegt, und daß auch der pulverförmige Gelbildner in diesem Gemisch gleichmäßig verteilt ist. Dieses ist gegeben, wenn der Wassergehalt und die Kornzusammensetzung in den einzelnen Körnungsbereichen Ton, Schluff und Sand innerhalb eines Variationskoeffizienten von etwa 10 % liegt.

Die Auflösung des Weichgelbildners erfolgt im freien Bodenwasser. Die Auflösung dauert viele Stunden und nimmt bis zu einem ganzen Tag = 24 Stunden in Anspruch. Sicherheitshalber erfolgt deshalb auf der Baustelle die Zugabe des Wasserglases (Stufe (b) des Verfahrens) erst am nächsten Tag, so daß mit einer guten Verteilung des Weichgelbildners in Bodengemisch gerechnet werden kann. Man kann die Auflösung des Weichgelbildners jedoch dadurch beschleunigen, daß man das Gemisch aus bindigem Boden und Weichgelbildner einer mechanischen Verdichten bei gleichzeitiger Vibration unterwirft. Hierzu werden vorzugsweise Rüttelwalzen oder Rüttelplatten verwendet. In dieser Ausführungsform läßt sich die Auflösung der Weichgelbildner im freien Bodenwasser auf 4 bis 6 Stunden verkürzen. Im allgemeinen wiegt dieser Vorteil der Zeitersparnis den Nachteil der Vornahme eines zusätzlichen Arbeitsschrittes auf, so daß diese Arbeitsweise in der Praxis bevorzugt ist. Ein weiterer Vorteil besteht in der größeren Unabhängigkeit gegenüber unvorhergesehenen Witterungsänderungen.

Zur Erzielung des homogenen Gemisches in Stufe (a) kann man entweder so vorgehen, daß zunächst der bindige Boden homogenisiert und anschließend der Weichgelbildner homogen eingemischt wird. Bei gut homogenisierbaren Böden kann die Herstellung des homogenen Gemisches jedoch auch in einem Arbeitsgang erfolgen.

Die Homogenisierung bzw. Durchmischung des Bodens bzw. des Bodens mit dem Weichgelbildner kann z.B. direkt in der existierenden Bodenschicht mittels Erdbaufräsen erfolgen. Insbesondere bei schlecht durchmischbaren Böden, z.B. mit sehr hoher Bindigkeit (Kohäsion) empfiehlt sich eine Durchmischung mittels Zwangsmischer.

Nach der Auflösung des Weichgelbildners im Bodenwasser erfolgt die homogene Einmischung des pulverförmigen Wasserglases. Hierfür gelten die gleichen Bedingungen wie vorstehend für die Einmischung des Weichgelbildners beschrieben.

Nach der homogenen Einmischung des Wasserglases kann das in Stufe (b) erhaltene Gemisch in Stufe (c) unmittelbar mechanisch verdichtet werden. Vorzugsweise läßt man jedoch zwischen den Stufen (b) und (c) das Gemisch über einen gewissen Zeitraum ruhen, z. B. 1 bis 4 Stunden, was einer möglichst guten Reaktionsbereitschaft des Wasserglases dienen soll. Anschließend wird das Gemisch eingebaut und verdichtet.

Die beschriebene Erfindung, einen Abdichtungsboden mit Schadstoffrückhaltung herzustellen, zeigt über das Anwendungsgebiet auf dem Gebiet der Abdichungstechnik auch Lösungen hinsichtlich der Altlastensicherung auf. So können z.B. schadstoffbelastete Böden mit einem derart aufbereiteten Abdichungsgemisch im Verhältnis von z.B. 3 : 1 bzw. 1 : 1 homogen vermischt und verdichtet werden. Ein derartiges Gemisch zeigt eine hohe Schadstoffrückhaltung im Eluatverhalten.

Sollten solche Abdichtungsgemische bautechnisch unter Straßen- oder Industrieböden zur doppelten Absicherung gegen Elution eingesetzt werden, kann dann eine zusätzliche Zementvergütung das Tragverhalten verbessern, ohne das Eluatverhalten zu verschlechtern, so daß derart vergütete Gemische auch als Baustoffe, z.B. zum Herstellen von Tragschichten unter Straßen und Gebäuden eingesetzt werden können. Unter diesem Gesichtspunkten des Eluierverhaltens können somit auch umweltgefährdende Reststoffe sicher auf Inert-Deponien abgelagert werden bzw. auf der Baustelle unter Maßgabe der beschriebenen Behandlung verbleiben.

Im folgenden wird die Erfindung an Hand der Beispiele erläutert.

Nach dem Stand der Technik ist bekannt, daß Abdichtungsschichten aus tonhaltigen Schluffböden gebaut werden können. Hinsichtlich der Kornzusammensetzung können die Schluffböden in 3 Bereiche eingeteilt werden:
1) Lößböden (Lößlehm)
   Hierbei handelt es sich nach der Kornverteilung hauptsächlich um einen Mittel- bis Grobschluff, einen relativ gleichkörnigen Boden, der 10 - 20 % Feinsandanteile und 3 - 9 % Tonanteile besitzt.
2) Sandiger bis stark sandiger Schluff (Auelehm)
   Hierbei handelt es sich um einen Boden mit Sandanteilen von 25 - 60 %, im Schluffbereich um eine relativ stetige Korngrößenverteilung aller Bereiche von Fein- bis Grobschluff und unterschiedlichen Tonanteilen von 12 - 20 %.
3) Hochflutlehme
   Dies sind sandige bis feinsandige Schluffe mit einem Tonanteil zwischen 16 und 25 % und einem Sandanteil von 5 - 20 %. Der Schluffbereich ist ebenfalls in der Korngrößenverteilung stetig verlaufend.

Zur Herstellung von Basisabdichungsschichten sind die Lößlehme erdbau- und abdichungstechnisch am schwierigsten zu behandeln, weil sie eine hohe Gleichkörnigkeit und damit eine hohe Veränderbarkeit hinsichtlich der Plastizität bei geringen Wassergehaltsschwankungen mit sich bringen und aufgrund der Gleichkörnigkeit gleich große Bodenporen besitzen, die durch feinere Bodenpartikel der gleichen Bodenart nicht ausgefüllt werden. Deshalb müssen derartige Bodenschichten, wenn sie hinsichtlich ihres Durchlässigkeitsbeiwertes verbessert werden, mit Zuschlagstoffen, wie Tonmehl, Bentonit oder Wasserglas behandelt werden. Die erzielbaren Durchlässigkeitsbeiwerte dieser Bodenarten durch die genannten Verbesserungen liegen bei K_{f} ≈ 1 x 10⁻¹⁰ m/s.

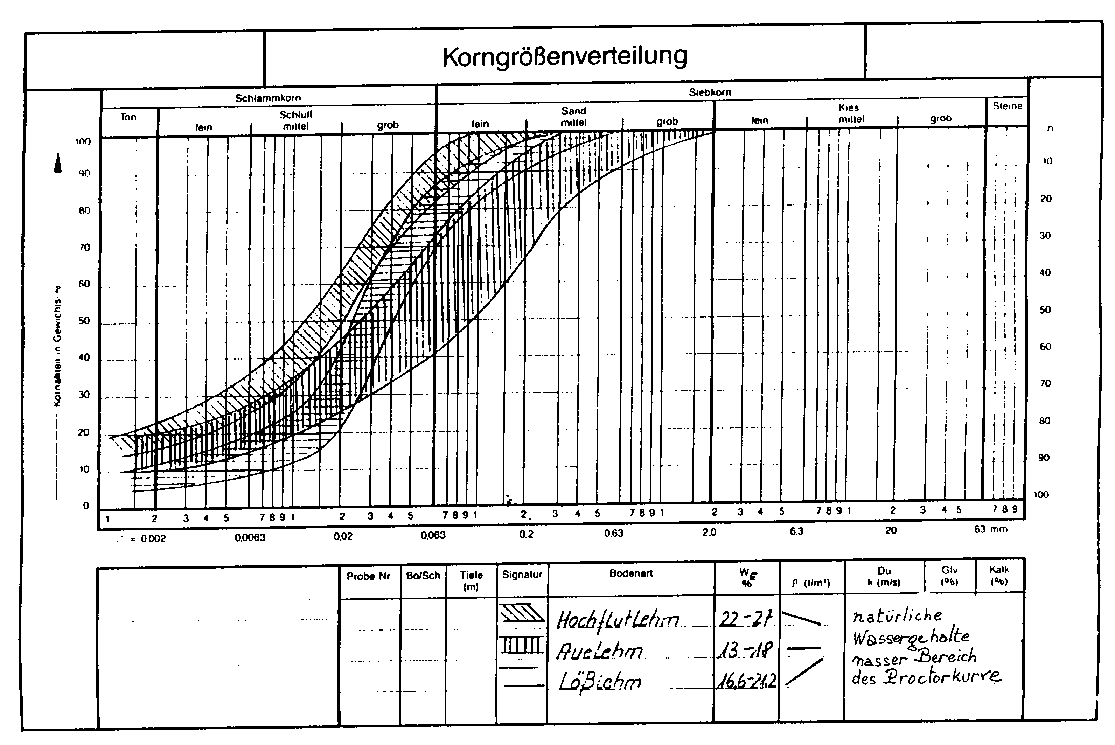

Die Versuche wurden mit den drei vorgenannten Lehmarten durchgeführt, deren Korngrößenverteilungen aus Abbildung 1 ersichtlich sind. In Abbildung 1 ist auch der natürliche Wassergehalt der Lehmböden angegeben. Mit diesem Wassergehalt liegen die genannten Böden im nassen Bereich der Proktorkurve, so daß diesbezüglich keine besonderen Maßnahmen zu ergreifen sind.

Die Bodenproben wurden wie folgt verarbeitet:
Zunächst wurde der erdfeuchte Boden mit dem genannten Wassergehalt durch Zwangsmischung derartig vermischt, daß sich nach optischer Bewertung das Bodengemisch hinsichtlich des Wassergehaltes und der Kornstruktur als homogen darstellte. Zu diesem homogenen Bodengemisch wurden die in Tabelle 1 genannten Gelbildner in Mengen von 5 %, bezogen auf freies Bodenwasser zugegeben. Die Gelbildner wurden durch Zwangsmischung gleichmäßig in dem homogenen Bodengemisch verteilt.

Nach der Auflösung des Weichgelbildners (im Laborversuch 5 bis 6 Stunden) wurde in das Bodengemisch trockenes Wasserglaspulver (Sprühwasserglas) mit einem SiO₂-Gehalt von ca. 60 % (Natronwasserglas, Deposil N Firma Henkel) in solcher Menge zugegeben, daß sich im Bodenwasser eine 5 %-ige Wasserglaslösung einstellt. Das Wasserglas wurde - wie vorher der Gelbildner - durch intensives Mischen gleichmäßig im Boden verteilt und nach 1 Stunde im Proctortopf mit der genormten Proctorenergie gemäß DIN verdichtet.

Aufgrund des vorhandenen Wassergehaltes stellte sich bei Aufwendung der Proctorenergie eine Proctordichte von ≈ 93 % ein.

In Vorversuchen an verdichteten Bodenproben konnte nachgewiesen werden, daß durch die obenbeschriebene Verfahrensweise eine gleichmäßige Verteilung des Bodenwassers und von Gelbildner und Wasserglas im Bodenwasser sichergestellt ist.

Bei den Versuchen wurde weiterhin beobachtet, daß durch Einstampfen der mit Gelbildnern durchmischten Bodenprobe und nachträgliches Rütteln auf dem Rütteltisch eine schnellere Verteilung im Bodenwasser gegeben ist. Das gleiche gilt auch für die Einarbeitung des Wasserglases.

Die Ergebnisse sind in Tabelle I zusammengestellt.

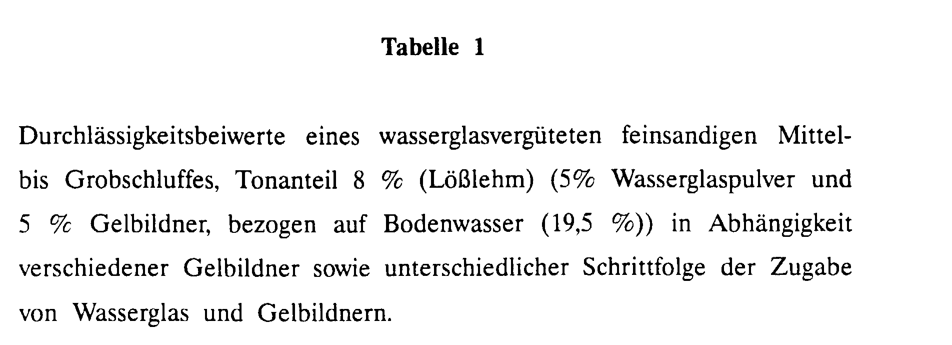

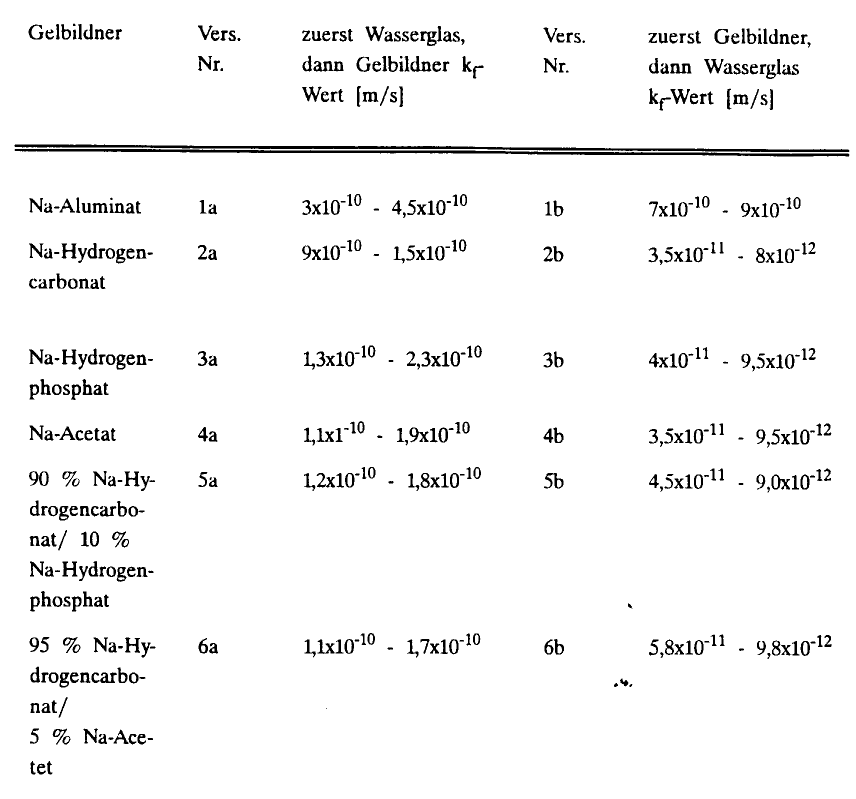

Bei den Versuchen 2b bis 6b der Tabelle I handelt es sich um erfindungsgemäße Versuche, und Versuch 1b ist ein Kontrollversuch. Bei Versuch 1a handelt es sich um einen Vergleichsversuch zum Stand der Technik gemäß EP-B 338 039, und die Versuche 2a bis 6a sind wiederum Kontrollversuche.

Man sieht, daß bei den erfindungsgemäßen Versuchen 2b bis 6b k_{f}-Werte von mindestens 6 x 10⁻¹¹ und bis zu 8 x 10⁻¹² erreicht werden. Beim Kontrollversuch 1b liegt das Ergebnis um mindestens eine Größenordnung schlechter, und auch der Vergleichsversuch 1a gemäß Stand der Technik liefert keine besseren Ergebnisse. Schließlich ist festzuhalten, daß auch die Kontrollversuche 2a bis 6a (zu vergleichen sind jeweils die Versuche a und b, also 2a mit 2b, usw.) ausnahmslos keine besseren Ergebnisse als 1 x 10⁻¹⁰ liefern. Dieses Ergebnis ist überraschend und zeigt, daß nur mit der Kombination von Aluminat-freiem Weichgelbildner mit der erfindungsgemäßen speziellen Verfahrensweise, d.h. zuerst Einmischen des Weichgelbildners und erst danach Zugabe des Wasserglases, die hervorragenden Abdichtungswerte im Bereich von k_{f} = 10⁻¹¹ bis 10⁻¹² erreicht werden.

Da es sich bei Lößlehm um einen relativ gleichkörnigen Boden handelt, und demgegenüber Auelehm und Hochflutlehm eine breitere Korngrößenverteilung besitzen (vgl. Abbildung 1), sollten an sich mit Auelehm und Hochflutlehm, unter ansonsten gleichen Bedingungen, bessere Durchlässigkeitsbeiwerte (k_{f}-Werte) erzielbar sein. Tatsächlich wurden derartig verbesserte k_{f}-Werte gefunden, wie sich aus den Daten der Tabelle II ergibt. Die Versuchsbedingungen waren exakt die gleichen wie bei der Verwendung von Lößlehm (siehe Tabelle I).

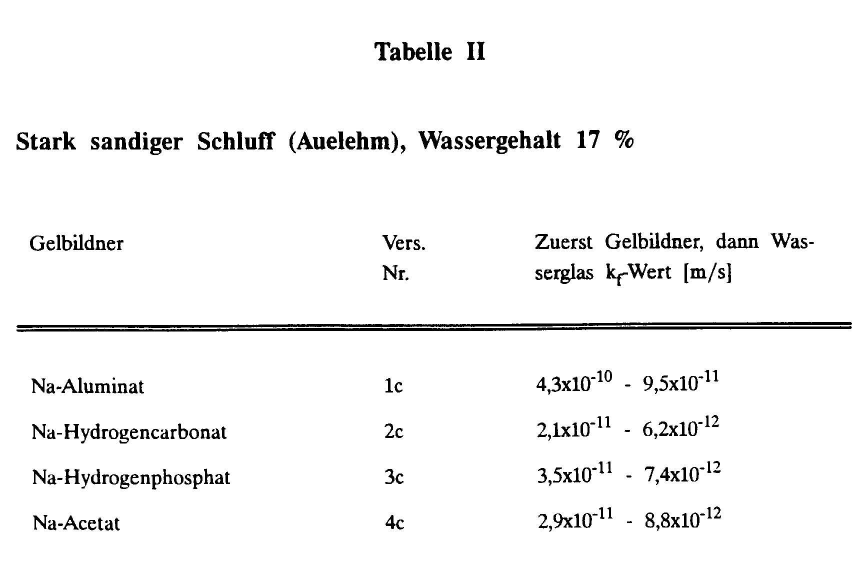

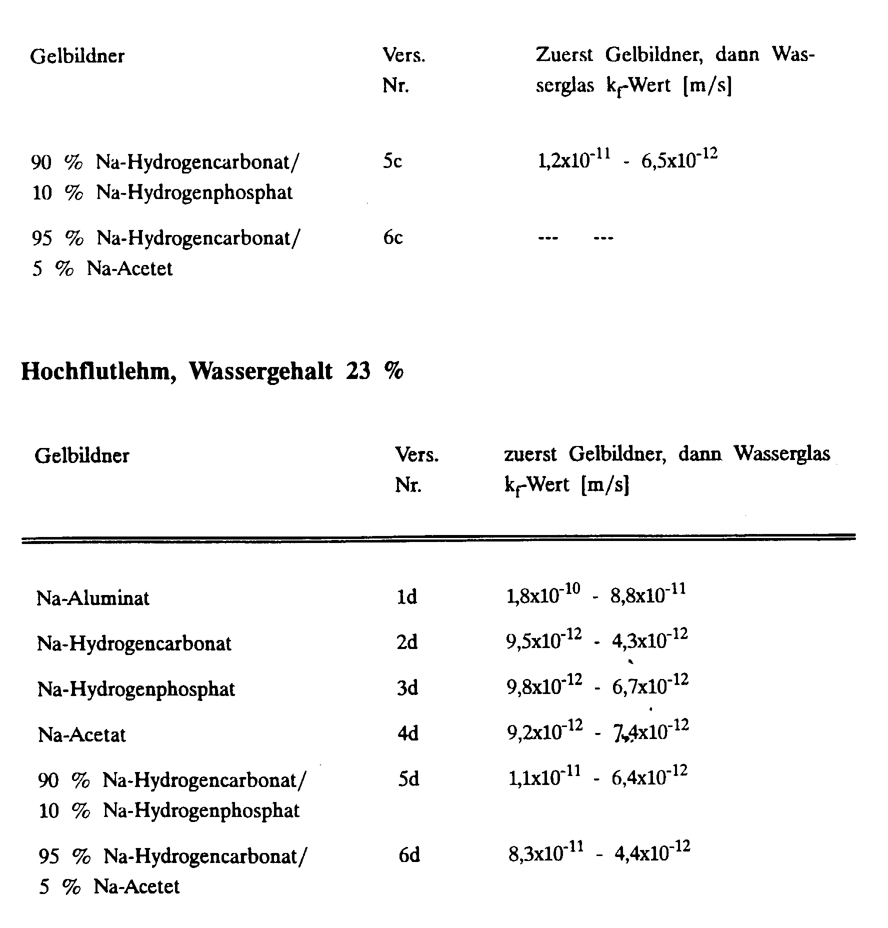

Bei den Ergebnissen der Tabelle II handelt es sich bei den Versuchen 1c und 1d um Kontrollversuche, die dem Kontrollversuch 1b der Tabelle I entsprechen. Die Versuche 2c bis 5c und 2d bis 5d sind mit den Versuchen 2b bis 5b der Tabelle I zu vergleichen; der Versuch 6d mit dem Versuch 6b von Tabelle I (Versuch 6c konnte wegen Geräteausfall nicht gemessen werden).

Tabelle II läßt sich entnehmen, daß die k_{f}-Werte mit Auelehm und Hochflutlehm insgesamt etwas besser sind als bei Verwendung von Lößlehm (Tabelle I).

Zur Prüfung des Schadstoffrückhalte-Vermögens der gemäß Tabelle I hergestellten Abdichtungsschichten wurde das Penetrationsverhalten gegenüber künstlichem Deponiesickerwasser über einen Zeitraum von 6 Jahren untersucht. Zu diesem Zweck wurde der erfindungsgemäß mit Weichgelbildner und Wasserglas vergütete Lößlehm mit k_{f}-Werten von ca. 7 bis 3 x 10⁻¹¹ m/s in Durchlässigkeitsprüfgeräte (Triax-Geräte) eingebaut und mit einem künstlichen Deponiesickerwasser in Anlehnung an G. Friesicke; "Deponiesickerwasser - was ist das, was sollte damit geschehen?" im LWA-Jahresbericht '85 als Prüfflüssigkeit von i = 20 beaufschlagt.

Die Zusammensetzung des künstlichen Deponiesickerwassers ist in der Tab. III aufgeführt. Es wurde hierbei auf die Variationsbreiten geachtet, wie sie auch bei realen Deponiesickerwässern vorkommen; d.h. es wurden 10 verschiedene Sickerwässer verwendet, die die gesamten, in Tab. III angegebenen Bereiche abdecken.

**Tabelle III**

| **Zusammensetzung des künstlichen Deponiesickerwassers** | |
|---|---|
| pH-Wert | 4 - 9 |
| Leitfähigkeit | 10.000 - 30.000 µS/m |
| Na⁺ | 4,0 g/l - 8,0 g/l |
| Ca⁺⁺ | 2,0 g/l - 6,0 g/l |
| Cl⁻ | 2,0 g/l - 10 g/l |
| Cu²⁺ | 0,5 mg/l - 20,0 mg/l |
| Sulfat | 1,0 - 3,0 g/l |
| CSB (chemischer Sauerstoffbedarf) | 3 g/l - 9,0 g/l |

Die Ergebnisse sind in den Abbildungen 2 bis 6 zusammengestellt. Im Vergleich dazu sind in den Abbildungen die Schadstoffpenetrationen einer Abdichtungsschicht aus Ton, deren K_{f}-Wert entsprechend den geltenden Zulassungsbedingungen bei < 1 x 10⁻¹⁰ m/s liegen muß (Verweilzeit 6 Jahre), dargestellt. Es handelt sich hierbei um die Basisabdichtung einer Siedlungsabfalldeponie mit direktem Sickerwasserüberstau (Deponie Geldern-Pont).

Den Abbildungen 2 bis 6 läßt sich folgendes entnehmen:
Es ist deutlich erkennbar, daß bei den Tonkörpern merkliche Eindringtiefen der Schadstoffe gefunden wurden. Im Vergleich hierzu kann bei der vorliegenden Erfindung eine Penetration der Schadstoffe im gleichen Zeitraum nachgewiesen werden, was von wesentlicher Bedeutung ist. Die Penetration der untersuchten Parameter - siehe Abbildungen 2-6 - erfolgt etwa bei der Erfindung bis etwa 2,0 cm während bei den Tonabdichtungen Eindringtiefen während der gleichen Zeit bis etwa 30 cm und mehr festgestellt werden können. In diesem Zusammenhang ist darauf zu verweisen, daß die Eindringtiefe von 2,0 cm, die Bandbreite der Nullinie darstellt, weil diese Zone durch Sickerwasserüberstau leicht aufweicht und damit verstärkt Deponiesickerwasser aufnimmt. Wenn man bedenkt, daß die mineralische Dichtung eine Schadstoffbarriere auf Dauer sein soll, so kommt der Erfindung einer mineralischen Abdichtung mit Schadstoffrückhaltung eine sehr große Bedeutung zu.

## Patentansprüche

1. Verfahren zur Abdichtung von Bodenformationen, wobei eine mineralische Abdichtungsschicht aus einem bindigen Boden unter Zusatz von pulverförmigem Wasserglas aufgebracht und mechanisch verdichtet wird, dadurch **gekennzeichnet**, daß man
(a) zunächst aus einem natürlich bzw. künstlich vorkommenden bindigen Boden mit einem Wassergehalt im nassen Bereich der Proctorkurve unter Zusatz von pulverförmigem Aluminat-freiem Weichgelbildner ein homogenes Gemisch herstellt,
(b) nach Auflösung des Weichgelbildners im Bodenwasser pulverförmiges Wasserglas homogen einarbeitet und
(c) schließlich mechanisch verdichtet.

2. Verfahren nach Anspruch 1, dadurch gekennzeichnet, daß man als Weichgelbildner Natriumhydrogencarbonat verwendet.

3. Verfahren nach Anspruch 1 oder 2, dadurch gekennzeichnet, daß man den pulverförmigen Weichgelbildner in einer Menge von 3 bis 6 Gew.%, bezogen auf freies Bodenwasser verwendet.

4. Verfahren nach einem der Ansprüche 1 bis 3, dadurch gekennzeichnet, daß man das pulverförmige Wasserglas in einer Menge von 3 bis 6 Gew.%, bezogen auf freies Bodenwasser verwendet.

5. Verfahren nach einem der Ansprüche 1 bis 4, dadurch gekennzeichnet, daß man ein Gewichtsverhältnis von Weichgelbildner zu Wasserglas im Bereich von etwa 1 : 1 verwendet.

6. Verfahren nach einem der Ansprüche 1 bis 5, dadurch gekennzeichnet, daß man die Auflösung des Weichgelbildners durch mechanische Verdichtung bei gleichzeitiger Vibration beschleunigt.

7. Verfahren nach Anspruch 6, dadurch gekennzeichnet, daß man eine Rüttelwalze oder Rüttelplatte verwendet.

8. Verfahren nach einem der Ansprüche 1 bis 7, dadurch gekennzeichnet, daß man das Gemisch nach der Einarbeitung des pulverförmigen Wasserglases in Stufe (b) und vor Durchführung der mechanischen Verdichtung (c) 1 - 4 Stunden ruhen läßt.

9. Verfahren nach einem der Ansprüche 1 bis 8, dadurch gekennzeichnet, daß man einen bindigen Boden mit einem Wassergehalt im nassen Bereich von 95 bis 92% der Proctorkurve verwendet.

10. Verfahren nach einem der Ansprüche 1 bis 9, dadurch gekennzeichnet, daß man ein Natronwasserglas verwendet.

## Claims

1. Process for sealing soil formations in which a mineral sealing layer of a cohesive soil is applied, with addition of pulverulent waterglass, and is compacted mechanically, characterized in that
(a) a homogeneous mixture is first prepared from a naturally occurring or synthetic cohesive soil having a water content in the wet region of the Proctor curve, with addition of a pulverulent aluminate-free agent which forms a soft gel,
(b) after the agent which forms a soft gel has dissolved in the soil water, pulverulent waterglass is incorporated homogeneously, and
(c) the mixture is finally compacted mechanically.

2. Process according to claim 1, characterized in that sodium bicarbonate is used as the agent which forms a soft gel.

3. Process according to claim 1 or 2, characterized in that the pulverulent agent which forms a soft gel is used in an amount of 3 to 6% by weight, based on the free soil water.

4. Process according to one of claims 1 to 3, characterized in that the pulverulent waterglass is used in an amount of 3 to 6% by weight, based on the free soil water.

5. Process according to one of claims 1 to 4, characterized in that a weight ratio of agent which forms a soft gel to waterglass in the region of about 1 : 1 is used.

6. Process according to one of claims 1 to 5, characterized in that the dissolving of the agent which forms a soft gel is accelerated by mechanical compaction with simultaneous vibration.

7. Process according to claim 6, characterized in that a vibrating roll or vibrating plate is used.

8. Process according to one of claims 1 to 7, characterized in that after incorporation of the pulverulent waterglass in stage (b) and before carrying out the mechanical compaction (c), the mixture is left to stand for 1 - 4 hours.

9. Process according to one of claims 1 to 8, characterized in that a cohesive soil having a water content in the wet region of 95 to 92% of the Proctor curve is used.

10. Process according to one of claims 1 to 9, characterized in that a sodium waterglass is used.

## Revendications

1. Procédé d'étanchéification de formations de sol, selon lequel on épand une couche minérale d'étanchéification constituée d'un sol cohérent avec ajout de verre soluble pulvérulent et on la tasse mécaniquement, caractérisé en ce que
(a) on fabrique d'abord un mélange homogène à partir d'un sol cohérent, présent naturellement ou artificiellement, ayant une teneur en eau dans le domaine humide de la courbe proctor, en ajoutant un gélifiant pulvérulent sans aluminate,
(b) après dissolution du gélifiant dans l'eau du sol, on incorpore de façon homogène du verre soluble pulvérulent, et
(c) on effectue finalement un tassement mécanique.

2. Procédé selon la revendication 1, caractérisé en ce que l'on utilise comme gélifiant de l'hydrogénocarbonate de sodium.

3. Procédé selon la revendication 1 ou 2, caractérisé en ce que l'on utilise le gélifiant pulvérulent en une quantité de 3 à 6 % en poids, par rapport à l'eau libre du sol.

4. Procédé selon l'une des revendications 1 à 3, caractérisé en ce que l'on utilise le verre soluble pulvérulent en une quantité de 3 à 6 % en poids, par rapport à l'eau libre du sol.

5. Procédé selon l'une des revendications 1 à 4, caractérisé en ce que l'on utilise un rapport de poids du gélifiant au verre soluble de 1 : 1 environ.

6. Procédé selon l'une des revendications 1 à 5, caractérisé en ce que l'on accélère la dissolution du gélifiant par un tassement mécanique avec vibrations simultanées.

7. Procédé selon la revendication 6, caractérisé en ce que l'on utilise un rouleau vibrant ou une plaque vibrante.

8. Procédé selon l'une des revendications 1 à 7, caractérisé en ce que, après avoir incorporé le verre soluble pulvérulent à l'étape (b) et avant de mettre en oeuvre le tassement mécanique (c), on laisse reposer le mélange pendant 1 à 4 heures.

9. Procédé selon l'une des revendications 1 à 8, caractérisé en ce que l'on utilise un sol cohérent ayant une teneur en eau dans le domaine humide de 95 à 92 % de la courbe proctor.

10. Procédé selon l'une des revendications 1 à 9, caractérisé en ce que l'on utilise comme verre soluble du silicate de soude.
